# EUROPÄISCHE PATENTSCHRIFT

(11) **EP 1 852 739 B1**
(45) Veröffentlichungstag und Bekanntmachung des Hinweises auf die Patenterteilung: **06.01.2010**
(21) Anmeldenummer: 07105599.0
(22) Anmeldetag: 04.04.2007
(51) Int. Cl.: G02F 1/1347

(54) **Farb-Flüssigkristallanzeigeeinrichtung**
Colour liquid crystal display device
Dispositif couleur à écran à cristaux liquides

(30) Priorität: 13.04.2006 DE 102006017564
(43) Veröffentlichungstag der Anmeldung: 07.11.2007
(73) Patentinhaber: AEG Gesellschaft für moderne Informationssysteme mbH, 89077 Ulm (DE)
(72) Erfinder: Bayrle, Reiner, 89129 Langenau (DE); Bitter, Thomas, 73342 Bad Ditzenbach (DE); Bader, Otto, 88447 Warthausen (DE)
(74) Vertreter: Winter, Brandl, Fürniss, Hübner Röss, Kaiser, Polte Partnerschaft Patent- und Rechtsanwaltskanzlei

(56) Entgegenhaltungen:
- WO-A-03/071347
- JP-A- 10 054 996
- US-A- 5 015 074
- US-A1- 2005 094 059
- US-A1- 2006 061 530

## Beschreibung

Die Erfindung betrifft eine Farb-Flüssigkristallanzeigeeinrichtung nach Anspruch 1.

Farb-Flüssigkristallanzeigeeinrichtungen mit cholesterischen Flüssigkristallen eignen sich besonders für reflektive Farb-LCD-Anzeigeeinrichtungen. Derartige Farb-Flüssigkristallanzeigeeinrichtungen sind in einer Vielzahl von Ausführungen bekannt. Beispielhaft wird hierzu auf die Druckschriften US 5,493,430 B, US 2004/0239830 A1 und US 2004/0041163 A1 verwiesen. Bei diesen bekannten Farb-Flüssigkristallanzeigeeinrichtungen werden die verschieden Farben durch Mischung der drei Grundfarben Rot, Grün und Blau dargestellt. Folglich benötigt man für die Darstellung eines einzelnen farbigen Pixels drei getrennte Pixel in den genannten drei Grundfarben, die in einer Ebene angeordnet sind. Hierdurch wird die Auflösung der Farb-Flüssigkristallanzeigeeinrichtung begrenzt.

Aus der US 6,791,512 B1 ist eine Farb-LCD-Anzeige mit zwei hintereinander angeordneten Flüssigkristallschichten bekannt. Hierbei sind in einer Flüssigkristallschicht die einzelnen Grundfarbpixel nebeneinander angeordnet. Die zweite Flüssigkristallschicht dient lediglich dazu Grundfarbpixel aus der ersten Flüssigkristallschicht versetzt oder nicht versetzt darzustellen. Hierdurch wird eine schärfere Anzeige erreicht.

Aus den Druckschriften US 6,377,321 B1, US 6,654,080 B1 und die US 2005/0036077 A1 ist jeweils eine Farb-Flüssigkristallanzeigeeinrichtung bekannt, die zwei hintereinander angeordnete Flüssigkristallschichten aufweisen. Eine Flüssigkristallschicht dient hierbei zur Reflexion von sichtbarem Licht und die andere Flüssigkristallschichten dient zur Reflexion von IR-Licht. Eine Verbesserung der Auflösung wird hierbei nicht erreicht.

Aus der JP 100544996 A ist eine Farbflüssigkristallanzeigeeinrichtung bekannt, die eine erste und eine zweite cholesterische Flüssigkristallschicht aufweist, die in Betrachtungsrichtung hintereinander angeordnet sind. Die erste cholesterische Flüssigkristallschicht ist zwischen einem ersten und einem zweiten Substrat und die zweite cholesterische Flüssigkristallschicht ist zwischen dem zweiten und einem dritten Substrat angeordnet. In der ersten Flüssigkristallschicht sind abwechselnd grüne und rote Grundfarbpixel und in der zweiten Flüssigkristallschicht sind abwechselnd blaue und gründe Grundfarbpixel angeordnet.

Ein weiterer Nachteil bekannter Farb-LCD-Anzeigen besteht darin, dass deren Ablesbarkeit in hellem Sonnenlicht oder bei sonstiger heller Umgebung unbefriedigend ist.

Es ist daher Aufgabe der vorliegenden Erfindung eine Farb-Flüssigkristallanzeigeeinrichtung bereitzustellen, die eine verbesserte Auflösung besitzt.

Die Lösung dieser Aufgabe erfolgt durch die Merkmale des Anspruch 1.

Dadurch, dass zur Darstellung eines Anzeigepixels sowohl nebeneinander als auch hintereinander liegende Grundfarbpixel herangezogen werden, werden in einer Ebene bzw. in einer Flüssigkristallschicht nur die Flächen für zwei statt der üblichen drei Grundfarbpixel pro Anzeigepixel benötigt. Hierdurch ergibt sich die verbesserte Auflösung. Zusätzlich wird auch die Ablesbarkeit der Anzeige bei hellem Sonnenlicht oder in sonstiger heller Umgebung verbessert.

Durch die vorteilhafte Ausgestaltung der Erfindung nach Anspruch 3 wird die Ansteuerung vereinfacht, da die beiden Grundfarbpixel der ersten Grundfarbe mit einer gemeinsam Steuerleitung angesteuert werden.

Durch die vorteilhafte Ausgestaltung der Erfindung nach Anspruch 4 wird eine Farb-Flüssigkristallanzeige bereitgestellt, die sowohl für den Tagals auch für den Nachtbetrieb geeignet ist. Im Tagbetrieb wird von aus der Betrachtungsrichtung einfallendes Licht, z. B. Sonnenlicht, durch die in zwei Flüssigkristallschichten angeordneten Grundfarbpixel so reflektiert, dass sich ein Gesamtpixel in einer bestimmten Farbe ergibt. Im Nachtbetrieb erfolgt die Beleuchtung durch eine Hinterleuchtungseinrichtung, die Licht durch Abstandstege zwischen den einzelnen Grundfarbpixel zu Reflektoren auf der Vorderseite der Farb-LCD-Anzeigevorrichtung emittiert. Die Reflektoren reflektieren dann das Licht auf die einzelnen Grundfarbpixel, so dass sich ein ähnliches Erscheinungsbild wie im Tagbetrieb ergibt. Die zur Darstellung eines Anzeigepixels mit einer bestimmten Farbe angesteuerten Grundfarbpixel reflektieren dann farbiges Licht in der geforderten Zusammensetzung in Richtung Betrachter. Durch die Absorberschicht wird ein definierter Dunkelzustand der Anzeigeeinrichtung ermöglicht.

Die im Bereich der Grundfarbpixel angeordnete Absorberschicht bzw. Absorberelemente können etwas in die Abstandsstege hineinragen oder gleich der lateralen Ausdehnung der Grundfarbpixel entsprechen oder auch etwas kleiner sein. Die im Bereich der Abstandsstege auf der Vorderseite vorgesehenen Reflektorelemente können in lateraler Richtung kleiner, gleich oder größer als die jeweiligen Abstandsstege sein. Die Dimensionierung der Absorberelemente und der Reflektorelemente erfolgt so, dass sich ein optisch einwandfreier Eindruck der Anzeigeeinrichtung ergibt

Durch die vorteilhafte Ausgestaltung der Erfindung nach Anspruch 5 erhöht sich die Leuchtdichte des durch die Grundfarbpixel der ersten Grundfarbe reflektierten Lichtes, so dass die Fläche der Grundfarbpixel mit der ersten Grundfarbe im Vergleich zu den Grundfarbpixel mit der zweiten und dritten Grundfarbe verkleinert werden kann. Hierdurch wird noch einmal eine Verbesserung der lateralen Auflösung erzielt.

Durch die Verteilung der Grundfarben Blau, Grün und Rot nach Anspruch 6 und 7 ergibt sich ein besserer Weißabgleich sowie Dunkelzustand der Anzeige.

Durch die vorteilhafte Ausgestaltung der Erfindung nach den Ansprüchen 8 bis 10 vergrößert sich der Farbraum im Rotbereich, d.h. es können Farben mit höherer Farbsättigung dargestellt werden.

Durch die vorteilhafte Ausgestaltung der Erfindung nach Anspruch 11 wird verhindert, dass auf der Anzeige gestreutes Licht nach vorne zum Betrachter gelangt und so die Qualität der Anzeige verschlechtert. Insbesondere verbessert sich dadurch makroskopisch der Dunkelzustand in hellem Auflicht.

Durch die vorteilhafte Ausgestaltung der Erfindung nach Anspruch 12 ergibt sich eine verbesserte Effizienz der Hinterleuchtung. Beispielsweise kann nur jeder zweite Abstandssteg für die Hinterleuchtung genutzt werden, während die schmaleren Abstandsstege lediglich zur Trennung der einzelnen Grundfarbpixel dienen.

Durch die vorteilhafte Ausgestaltung der Erfindung nach Anspruch 13 bis 16 wird dem Umstand Rechnung getragen, dass die Grundfarbpixel der ersten Grundfarbe pro Anzeigepixel zweimal vorhanden sind, wodurch die Fläche der beiden Grundfarbpixel der ersten Grundfarbe gegenüber der Fläche der Grundfarbpixel der beiden anderen Grundfarben verkleinert werden kann. Auch hierdurch verringert sich die für ein Anzeigepixel benötigte Fläche, was zu einer verbesserten Auflösung führt. Außerdem wird dadurch ein sehr genauer Weißabgleich der Farb-LCD-Anzeige ermöglicht.

Weitere Einzelheiten, Merkmale und Vorteile der Erfindung ergeben sich aus der nachfolgenden Beschreibung einer beispielhaften Ausführungsform der Erfindung.

Es zeigt:
Fig. 1 zeigte eine schematische Schnittdarstellung einer ersten Ausführungsform der Erfindung,
Fig. 2 eine Aufsicht auf die Grundfarbpixel der ersten Flüssigkristallschicht der Ausführungsform nach Fig. 1,
Fig. 3 eine Aufsicht auf die Grundfarbpixel der zweiten Flüssigkristallschicht der Ausführungsform nach Fig. 1,
Fig. 4 zeigt die Ausführungsform nach Fig. 1, wobei die Grundfarbpixel so geschaltet sind, dass blaues und grünes Licht zum Betrachter reflektiert wird,
Fig. 5 zeigt die Ausführungsform nach Fig. 1, wobei die Grundfarbpixel so geschaltet sind, dass grünes und rotes Licht zum Betrachter reflektiert wird,
Fig. 6 zeigt die Ausführungsform nach Fig. 1, wobei die Grundfarbpixel so geschaltet sind, dass lila und gelbes Licht zum Betrachter reflektiert wird,
Fig. 7 zeigt den grundsätzlichen Aufbau einer zweiten Ausführungsform der Erfindung, die sowohl mit Umgebungslicht als auch durch eine Hinterleuchtungseinrichtung beleuchtet werden kann,
Fig. 8 zeigt die zweite Ausführungsform nach Fig. 7 im Tagbetrieb bei der Darstellung eines gelben Anzeigepixels, und
Fig. 9 zeigt die Ausführungsform nach Fig. 7 im Nachtbetrieb mit aktivierter Hinterleuchtung für die Darstellung eines gelben Anzeigepixels.

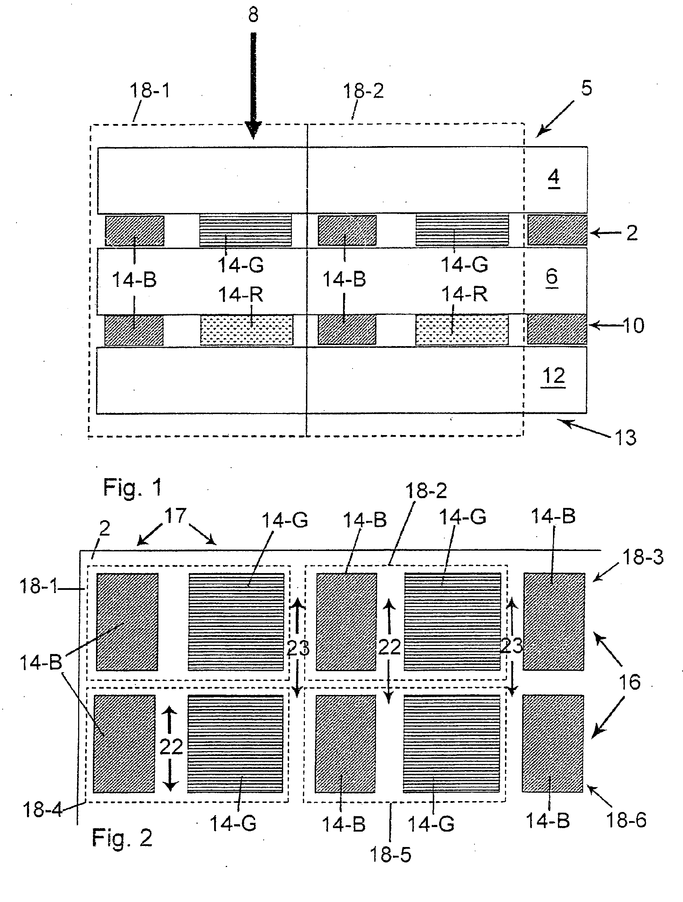

Fig. 1 zeigt eine schematisch Schnittdarstellung einer ersten beispielhafte Ausführungsform der Erfindung. Die dargestellte Farb-LCD-Anzeige umfasst eine erste Flüssigkristallschicht 2, die zwischen einem ersten Substrat 4 und einem zweiten Substrat 5 eingeschlossen ist. In Betrachtungsrichtung 8 hinter der ersten Flüssigkristallschicht 2 ist eine zweite Flüssigkristallschicht 10 angeordnet, die zwischen dem zweiten Substrat und einem dritten Substrat 12 eingeschlossen ist. Das erste, zweite und dritte Substrat 4, 6 und 12 besteht vorzugsweise aus Glas. In der ersten und zweiten Flüssigkristallschicht 2 und 10 sind jeweils mit Abstand zueinander eine Mehrzahl von Grundfarbpixel 14 in den drei Grundfarben Blau, Grün und Rot angeordnet. Die erste Grundfarbe B ist Blau, die zweite Grundfarbe G ist Grün und die dritte Grundfarbe R ist Rot.

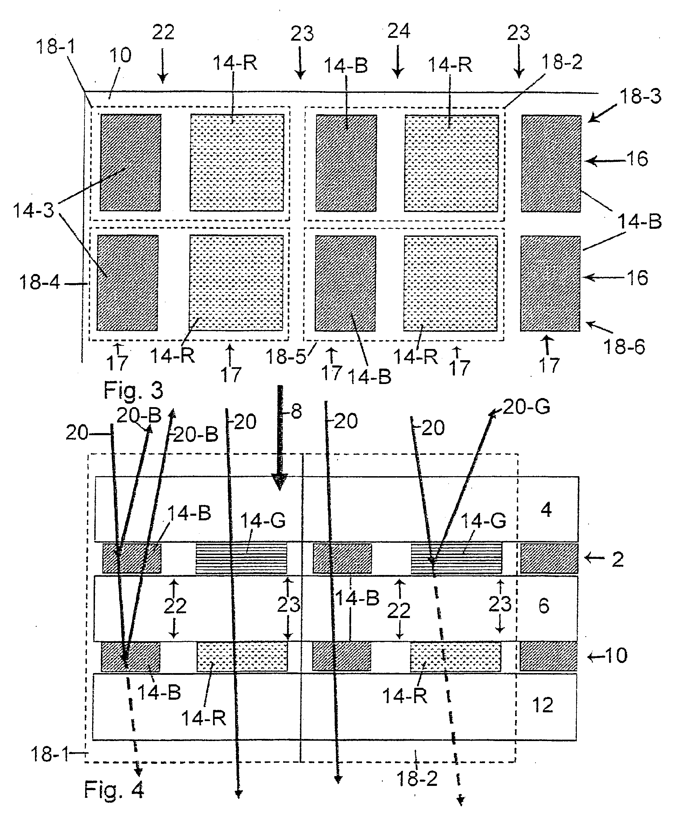

In Fig. 2 ist schematisch dargestellt, das in der ersten Flüssigkristallschicht 2 in einer Zeile 16 abwechselnd blaue und grüne Grundfarbpixel 14-B und 14-G angeordnet sind. In den einzelnen Grundfarbpixelspalten 17 sind somit jeweils gleichfarbige Grundfarbpixel 14 angeordnet. Fig. 3 zeigt eine Aufsicht auf die Matrixanordnung der Grundfarbpixel 14 in der zweiten Flüssigkristallschicht 10 mit einer Mehrzahl blauen - 14-B - und roten Grundfarbpixel 14-R, wobei abwechselnd blaue und rote Grundfarbpixel 14-B und 14-R angeordnet sind. In den einzelnen Grundfarbpixelspalten 17 sind somit jeweils gleichfarbige Grundfarbpixel 14 angeordnet. Die blauen Grundfarbpixel 14-B in der ersten Flüssigkristallschicht 2 weisen Helizität auf, die der Helzität der blauen Grundfarbpixel 14-2 in der zweiten Flüssigkristallschicht 10 entgegengesetzt ist. Beispielsweise sind die blauen Grundfarbpixel 14-B in der ersten Flüssigkristallschicht 2 rechtsdrehend, während die blauen Grundfarbpixel 14-B in der zweiten Flüssigkristallschicht 10 linksdrehend sind. Die Helizität der grünen und roten Grundfarbpixel 14-G und 14-R ist nicht entscheidend und daher beliebig gewählt werden. Wie in Fig. 2 und 3 dargestellt ist, ist sind die roten und grünen Grundfarbpixel 14-R und 14-G hinsichtlich ihrer Flächenausdehnung gleich groß und die blauen Grundfarbpixel 14-B sind etwa halb so groß.

Die einzelnen Grundfarbpixel 14 werden in bekannter Weise über durchsichtige Elektroden angesteuert, die aus Gründen der Übersichtlichkeit in der Zeichnung nicht dargestellt sind. Jeweils vier unmittelbar benachbarte Grundfarbpixel 14 wirken zur Darstellung eines einzelnen Anzeigepixels 18-i zusammen. Es handelt sich hierbei jeweils um zwei unmittelbar nebeneinander liegende Grundfarbpixel 14 in der ersten Flüssigkristallschicht 2 und jeweils um zwei unmittelbar unter diesen angeordnete Grundfarbpixel 14 in der zweiten Flüssigkristallschicht 10. In jedem Anzeigepixel 18-i wirken somit ein blaues Grundfarbpixel 14-B und ein grünes Grundfarbpixel 14-G in der ersten Flüssigkristallschicht 2 und ein blaues Grundfarbpixel 14-B und ein rotes Grundfarbpixel 14-R in der zweiten Flüssigkristallschicht 10 zusammen. In den Figuren 2 und 3 sind jeweils vier Anzeigepixel 18-1, 18-2, 18-4 und 18-5 vollständig dargestellt und ein zwei Anzeigepixel 18-3 und 18-6 lediglich teilweise. In den übrigen Figuren 1 und 4 bis 9 sind jeweils zwei Anzeigepixel 18-1 und 18-2 vollständig und jeweils ein Anzeigepixel 18-3 teilweise dargestellt.

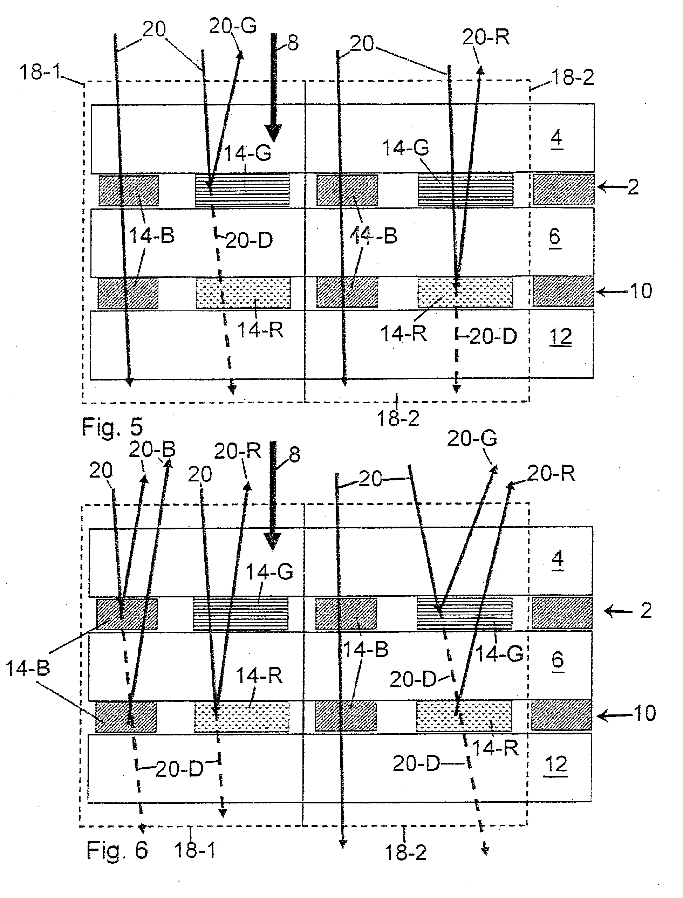

Die Fig. 4 bis 6 zeigen nun schematisch die Beleuchtung der Farb-Flüssigkristallanzeige gemäß der ersten Ausführungsform mit Licht, z.B. mit Sonnenlicht, das aus der Betrachtungsrichtung 8 auf die Farb-LCD-Anzeige einfällt. In dieser ersten Ausführungsform weist der blaue Grundfarbpixel 14-B in der ersten Flüssigkristallschicht 2 eine rechts drehende Helizität und der blaue Grundfarbpixel 14-B in der zweiten Flüssigkristallschicht 10 eine links drehende Helizität auf. Die einzelnen Grundfarbpixel 14 werden mittels der nicht dargestellten Ansteuerelektroden so geschaltet, dass in Fig. 4 das Farbanzeigepixel 18-1 blau und das Farbanzeigepixel 18-2 grün leuchtet. In Fig. 5 leuchtet das Farbanzeigepixel 18-1 grün und das Farbanzeigepixel 18-2 rot. In Fig. 6 leuchtet das Farbanzeigepixel 18-1 lila und das Farbanzeigepixel 18-2 gelb.

Wie aus Fig. 4 zu ersehen ist, wird aus dem weißen Licht 20, das auf die rechts drehenden, blau reflektierenden Grundfarbpixel 14-B in der ersten Flüssigkristallschicht 2 fällt, der links drehende Anteil als blaues Licht 20-B zum Beobachter reflektiert. Der restliche Teil des weißen Lichtes 20 durchdringt die rechts drehenden blauen Grundfarbpixel 14-B und trifft auf den links drehenden blauen Grundfarbpixel14-B in der zweiten Flüssigkristallschicht 10. Der links drehende blaue Grundfarbpixel 14-B in der zweiten Flüssigkristallschicht 10 reflektiert den rechts drehenden blauen Anteil als blaues Licht 20-B zum Beobachter. Das restliche Licht 20-D durchdringt das links drehende blaue Grundfarbpixel 14-B und wird beispielsweise in einem nicht dargestellten Absorber absorbiert. Durch die unterschiedliche Helizität der blauen Grundfarbpixel 14-B in der ersten und zweiten Flüssigkristallschicht 2 und 10 tragen beide unter- bzw. hintereinander angeordneten blauen Grundfarbpixel 14-B zur Farbreflexion bei, so dass die Größe der blauen Grundfarbpixel 14-B im Vergleich zur Größe der grünen und roten Grundfarbpixel verkleinert werden kann. Das grüne und rote Grundfarbpixel 14-G und 14-R in der ersten bzw. zweiten Flüssigkristallschicht 2 bzw. 10 sind auf Durchlass geschaltet, so dass das weiße Licht 20, das auf die grünen und roten Grundfarbpixel 14-G und 14-R trifft ohne Reflexion durchgelassen wird und somit nicht zur Anzeige beiträgt. Das ersten Anzeigepixel 18-1 leuchtet daher blau.

Auf das zweite Anzeigepixel 18-2 einfallendes weißes Licht 20 wird durch die blauen Grundfarbpixel 14-B sowohl in der ersten Flüssigkristallschicht 2 als auch in der zweiten Flüssigkristallschicht 10 durchgelassen bzw. nicht reflektiert. Damit wird kein blaues Licht zum Beobachter reflektiert. Das weiße Licht 20, das auf das grüne Grundfarbpixel 14-G fällt, wird hinsichtlich des grünen Anteils 20-G zum Beobachter reflektiert. Lichtanteile 20-D, die auf das rote Grundfarbpixel 14-R in der zweiten Flüssigkristallschicht 10 treffen werden ohne Reflexion durchgelassen. Damit leuchtet das zweite Anzeigepixel 18-2 grün.

In der Darstellung in Fig. 5 sind die einzelnen Grundfarbpixel 14 so geschaltet, dass das erste Anzeigepixel 18-1 grünes Licht erzeugt, während der das zweite Anzeigepixel 18-2 rotes Licht erzeugt.

Damit wird auf den ersten Anzeigepixel 18-1 einfallendes weißes Licht 20 durch die blauen Grundfarbpixel 14-B sowohl in der ersten Flüssigkristallschicht 2 als auch in der zweiten Flüssigkristallschicht 10 durchgelassen bzw. nicht reflektiert, so dass kein blaues Licht zum Beobachter gelangt. Das weiße Licht 20, das auf das grüne Grundfarbpixel 14-G fällt wird hinsichtlich des grünen Anteils 20-G zum Beobachter reflektiert, das restliche Licht 20-D durchdringt den grünen Grundfarbpixel 14-G. Diese Lichtanteile 20-B, die auf das rote Grundfarbpixel 14-R in der zweiten Flüssigkristallschicht 10 treffen werden ohne Reflexion durchgelassen und absorbiert. Damit leuchtet das erste Anzeigepixel 18-1 grün.

Im zweiten Anzeigepixel 18-2 einfallendes weißes Licht 20 wird durch die blauen Grundfarbpixel 14-B sowohl in der ersten Flüssigkristallschicht 2 als auch in der zweiten Flüssigkristallschicht 10 durchgelassen bzw. nicht reflektiert. Im Bereich des grünen Grundfarbpixel 14-G einfallendes Licht wird durchgelassen und trifft auf den dahinter angeordneten roten Grundfarbpixel 14-R in der zweiten Flüssigkristallschicht 10. Dieses rote Grundfarbpixel 14-R reflektiert den roten Anteil 20-R durch das auf Durchlass geschaltete grüne Grundfarbpixel 14-G hindurch zum Beobachter, das restliche Licht 20-D durchdringt den roten Grundfarbpixel 14-R und wird absorbiert. Damit leuchtet das zweite Anzeigepixel 18-2 rot.

In der Darstellung in Fig. 6 sind die einzelnen Grundfarbpixel 14 so geschaltet, dass das erste Anzeigepixel 18-1 lila Licht erzeugt, während das zweite Anzeigepixel 18-2 gelbes Licht erzeugt.

Folglich sind die vier Grundfarbpixel 14 in dem ersten Anzeigepixel 18-1 so geschaltet, dass einfallendes weißes Licht 20 von den beiden blauen Grundfarbpixel14-B wie im Falle von Fig. 3 hinsichtlich des blauen Anteils 20-B zum Beobachter reflektiert wird, das restliche Licht 20-D durchdringt beide blauen Grundfarbpixel 14-B. Im Bereich des grünen Grundfarbpixel 14-G einfallendes weißes Licht 20 wird durchgelassen und trifft auf den dahinter angeordneten roten Grundfarbpixel 14-R in der zweiten Flüssigkristallschicht 10. Dieses rote Grundfarbpixel 14-R reflektiert den roten Anteil 20-R des Lichts durch das auf Durchlass geschaltete grüne Grundfarbpixel 14-G hindurch zum Beobachter, das restliche Licht 20-D durchdringt den roten Grundfarbpixel 14-R. Durch die Mischung des blauen und roten Lichtes ergibt sich ein lila Farbeindruck für das erste Anzeigepixel 18-1.

Auf das zweite Anzeigepixel 18-2 einfallendes weißes Licht 20 wird durch die blauen Grundfarbpixel 14-B sowohl in der ersten Flüssigkristallschicht 2 als auch in der zweiten Flüssigkristallschicht 10 durchgelassen bzw. nicht reflektiert, so dass kein blaues Licht zum Beobachter gelangt. Im Bereich des grünen Grundfarbpixel 14-G einfallendes Licht wird hinsichtlich des grünen Anteils 20-G zum Beobachter hin reflektiert. Lichtanteile 20-D, die auf das dahinter angeordnete rote Grundfarbpixel 14-R in der zweiten Flüssigkristallschicht 10 treffen, werden hinsichtlich des roten Anteils 20-R durch das grüne Grundfarbpixel 14-G hindurch zum Beobachter hin reflektiert, das restliche Licht 20-D durchdringt den roten Grundfarbpixel 14-R. Durch die Mischung der roten und grünen Lichtanteile 20-R und 20-G ergibt sich gelbes Licht. Damit leuchtet das zweite Anzeigepixel 18-2 gelb.

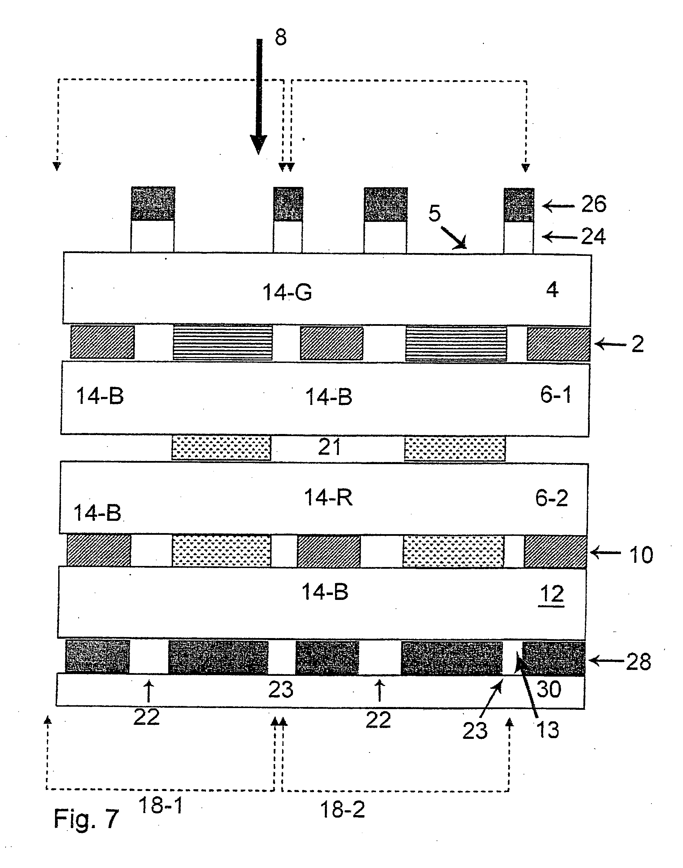

Nachfolgend wird anhand der Fig. 7 bis 10 eine zweite Ausführungsform der Erfindung beschrieben. Die zweite Ausführungsform stimmt vom Grundaufbau mit der ersten Ausführungsform überein. Unterschiede bestehen darin, dass bei der zweiten Ausführungsform das zweite Substrat 6 in ein erstes Teilsubstrat 6-1 und ein zweites Teilsubstrat 6-2 aufgespaltet ist, und dass zwischen den beiden Teilsubstraten 6-1 und 6-2 ein Farbfilter 21 zu Verbesserung der Farbqualität der roten Grundfarbpixel 14-R vorgesehen ist. Zwischen den einzelnen Grundfarbpixel 14 sind Abstandsstege 22 und 23 vorgesehen, wobei abwechselnd engere Abstandsstege 22 und breitere Abstandsstege 23 vorgesehen sind. Auf der Vorderseite 5 des ersten Substrats 4 sind im Bereich der Abstandsstege 22 und 23 Reflektoren 24 vorgesehen. Auf der dem Betrachter zugewandten Seite der Reflektoren 24 ist eine Absorberschicht 26 aufgebracht. Auf der Rückseite 13 des dritten Substrats 12 ist in den Bereichen außerhalb der Abstandsstege 22 und 23, d. h. hinter den Grundfarbpixel 14 eine weitere Absorberschicht 28 vorgesehen. In Betrachtungsrichtung 8 hinter dieser weiteren Absorberschicht 28 ist eine Hinterleuchtungseinrichtung 30, z.B. in Form einer LED-Hinterleuchtung oder einer OLED-Schicht angeordnet.

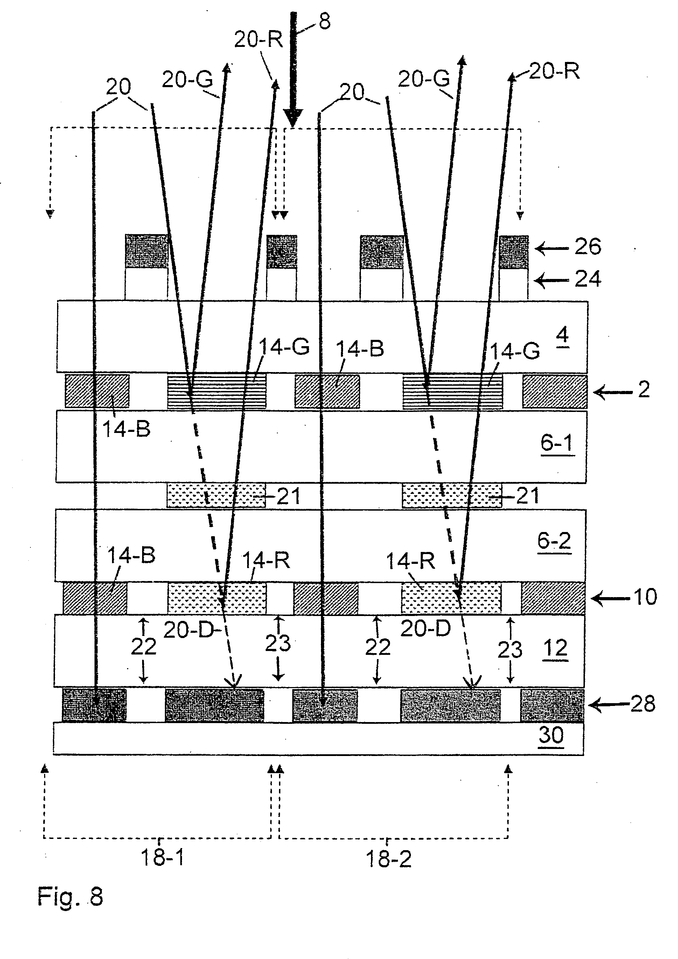

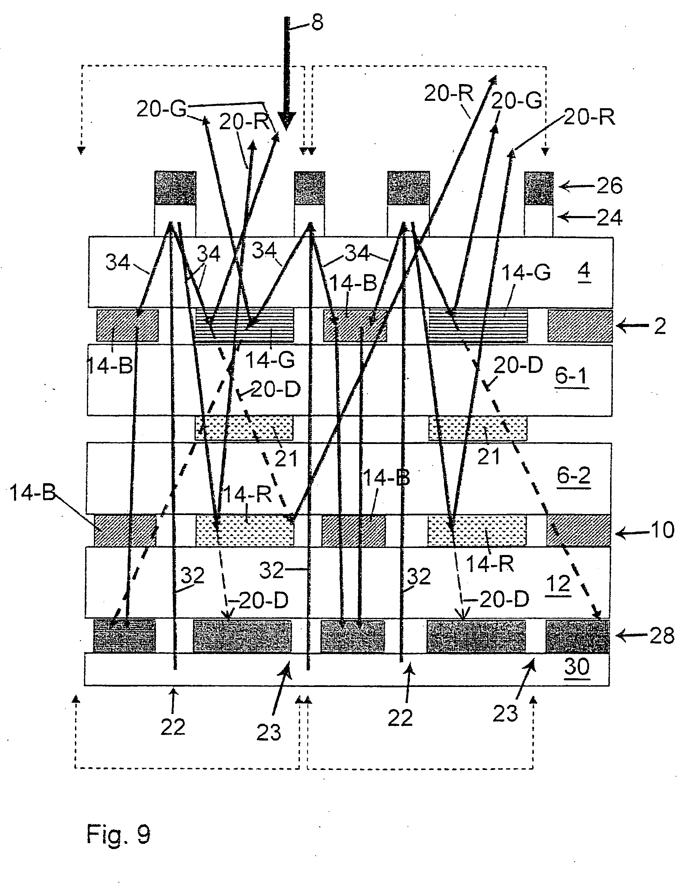

Nachfolgend wird anhand der Fig. 8 und 9 die Funktionsweise dieser zweiten Ausführungsform bei Tagbetrieb, d.h. bei Umgebungs- bzw. Sonnenlicht, und bei Nachtbetrieb mit eingeschalteter Hinterleuchtungseinrichtung 30 beschrieben.

Die Darstellung in Fig. 8 zeigt den Tagbetrieb, d.h. bei ausgeschalteter Hinterleuchtungseinrichtung 30. Die einzelnen Grundfarbpixel 14 sind so geschaltet, dass sowohl das erste Anzeigepixel 18-2 als auch das zweite Anzeigepixel gelb leuchtet. Aus Betrachtungsrichtung 8 einfallendes weißes Licht 20 durchläuft die blauen Grundfarbpixel 14-B und wird in der weiteren Absorberschicht 28 absorbiert. Aus dem weißen Licht 20, das auf die grünen Grundfarbpixel 14-G einfällt, wird der grüne Anteil 20-G in Richtung Betrachter reflektiert. Der durchgehende Anteil 20-D des weißen Lichts 20 durchdringt den Farbfilter 21, der im wesentlichen nur rotes Licht durchlässt, und trifft auf die roten Grundfarbpixel 14-R und wird dort nahezu vollständig zurück durch den Farbfilter 21 hindurch und auch durch die grünen Grundfarbpixel 14-G hindurch zum Betrachter reflektiert. In der Summe ergibt sich somit ein gelbes Anzeigepixel.

Auch in Fig. 9 leuchtet sowohl das erste als das zweite Anzeigepixel 18-1 und 18-2 gelb. Allerdings erfolgt die Beleuchtung der Farb-Anzeigeeinrichtung nicht mit Umgebungslicht, sondern durch Licht 32 aus aktivierten der Hinterleuchtungseinrichtung 30. Das weiße Licht 32 aus der Hinterleuchtungseinrichtung 30 wird durch die Abstandsstege 22 und 23 hindurch auf die Reflektoren 24 geführt und wird dort in gleicher Weise wie bei dem Tagbetrieb das Umgebungslicht auf die einzelnen Grundfarbpixel 14 reflektiert, so dass sich in gleicher Weise wie beim Tagbetrieb die Anzeige eines gelben Anzeigepixels ergibt. Die Reflektoren 24 sind so ausgebildet, dass senkrecht auftreffendes Licht kegelförmig zurückreflektiert wird. Damit ergeben sich Lichtstrahlen 34, die auf ein blaues Grundfarbpixel 14-B, auf den breiten Abstandssteg 22 und auf das grüne Grundfarbpixel jeweils in der ersten Flüssigkristallschicht 2 einfallen. Das auf das blaue Grundfarbpixel 14-B einfallende Licht 34 durchdringt das blaue Grundfarbpixel 14-B in der ersten Flüssigkristallschicht 2 und auch das blaue Grundfarbpixel 14-B in der zweiten Flüssigkristallschicht 10. Das auf den breiten Abstandssteg 22 einfallende Licht 34 fällt auf den roten Farbfilter 21 und anschließend auf den roten Grundfarbpixel 14-R und wird als rotes Licht 20-R zum Beobachter reflektiert. Aus dem auf den grünen Grundfarbpixel 14-G einfallenden Licht 34 wird der grüne Anteil 20-G zum Beobachter reflektiert. Das durchgehende Restlicht 20-D fällt auf den roten Farbfilter 21 und anschließend auf das rote Grundfarbpixel 14-R. Das rote Grundfarbpixel 14-R reflektiert das einfallende Licht 20-D als rotes Licht 20-R nahezu vollständig zum Beobachter. Restlicht 20-D, das einzelne Grundfarbpixel 14 durchdringt, wird in der weiteren Absorberschicht 28 auf der Rückseite 13 des dritten Substrats 12 absorbiert.

Bei der zweiten Ausführungsform erfolgt im Nachtbetrieb die Beleuchtung durch die Hinterleuchtungseinrichtung 30 sowohl durch die kleineren Abstandsstege 23 als auch durch die größeren Abstandsstege 23 und die Reflektoren 24. Die Beleuchtungsstege 22, 23 bestehen im Bereich der ersten und zweiten Flüssigkristallschicht 2, 10 aus transparentem Material, z. B. aus einem transparentem Kleber und im Bereich des roten Farbfilters 21 zwischen dem ersten und zweiten Teilsubstrat 6-1, 6-2 aus transparentem Potting-Material, z. B. aus Silikon.

Alternativ kann die Beleuchtung im wesentlichen nur über jeden zweiten Abstandssteg 22 erfolgen, d. h. die Abstandsstege 22 sind wesentlich breiter als die Abstandsstege 23. Die Abstandsstege 23 dienen dann lediglich der Trennung benachbarter Grundfarbpixel 14 und die Beleuchtung der Anzeige erfolgt durch die breiten Abstandsstege 22. Über die Breite der Abstandssteg quer zu der Betrachtungsrichtung 8 kann in gewissem Maße auch die Lichtmenge gesteuert werden, die zur Beleuchtung der Grundfarbpixel 14 zur Verfügung steht.

In den Flüssigkristallschichten können Abstandselemente, so genannte Spacer angeordnet sein, wie dies z. B. aus EP 2009704.4 A1 der bekannt ist.

Es wird darauf hingewiesen, dass die Darstellungen zu den beiden beispielhaften Ausführungsformen schematisch sind, insbesondere sind die einzelnen Strahlengänge nicht immer streng entsprechend der geometrischen Optik eingezeichnet.

### Bezugszeichenliste:

- 2: ersten Flüssigkristallschicht
- 4: erstes Substrat
- 5: Vorderseite von 4
- 6: zweites Substrat
- 6-1: erstes Teilsubstrat
- 6-2: zweites Teilsubstrat
- 8: Betrachtungsrichtung
- 10: zweite Flüssigkristallschicht
- 12: drittes Substrat
- 13: Rückseite von 12
- 14: Grundfarbpixel
- 14-B: Grundfarbpixel der ersten Grundfarbe B
- 14-G: Grundfarbpixel der zweiten Grundfarbe G
- 14-R: Grundfarbpixel der dritten Grundfarbe R
- 16: Grundfarbpixelzeilen
- 17: Grundfarbpixelspalten
- 18-i: Anzeigepixel
- 20: weißes Licht
- 20-B: blaues Licht
- 20-G: grünes Licht
- 20-R: rotes Licht
- 20-D: restliches Licht, Durchlicht
- 21: roter Farbfilter
- 22: Abstandsstege zwischen 14-B und 14-G
- 23: Abstandsstege zwischen 14-G und 14-R
- 24: Reflektoren
- 26: Absorberschicht
- 28: weitere Absorberschicht
- 30: Hinterleuchtungseinrichtung
- 32: weißes Licht aus 30
- 34: durch die Reflektoren 24 reflektiertes Licht

## Patentansprüche

1. Farb-Flüssigkristallanzeigeeinrichtung, mit
einer ersten cholesterischen Flüssigkristallschicht (2), die zwischen einem ersten und einem zweiten Substrat (4, 6; 6-1,6-2) angeordnet ist, die eine Mehrzahl von nebeneinander angeordneten Grundfarbpixel (14) enthält, wobei abwechselnd Grundfarbpixel einer ersten (14-B) und einer zweiten Grundfarbe (14-G) nebeneinander angeordnet sind, und
einer zweiten cholesterischen Flüssigkristallschicht (10), die in Betrachtungsrichtung (8) hinter der ersten Flüssigkristallschicht (2) zwischen dem zweiten Substrat (6; 6-1,6-2) und einem dritten Substrat (12) angeordnet ist, die eine Mehrzahl von nebeneinander angeordneten Grundfarbpixel (14) enthält, wobei abwechselnd Grundfarbpixel der ersten (14-B) und einer dritten Grundfarbe (14-R) nebeneinander angeordnet sind, **dadurch gekennzeichnet,**
**dass** die Grundfarbpixel der ersten Grundfarbe (14-B) in der ersten und zweiten Flüssigkristallschicht (2, 10) in Beobachtungsrichtung (8) hintereinander angeordnet sind,
**dass** die Grundfarbpixel der zweiten Grundfarbe (14-G) in der ersten Flüssigkristallschicht (2) und die Grundfarbpixel der dritten Grundfarbe (14-R) in der zweiten Flüssigkristallschicht (10) in Beobachtungsrichtung (8) hintereinander angeordnet sind, und
**dass** jeweils zwei Grundfarbpixel der ersten Grundfarbe (14-B), die in der ersten und zweiten Flüssigkristallschicht (2, 10) hintereinander angeordnet sind mit dem benachbarten Grundfarbpixel der zweiten Grundfarbe (14-G) in der ersten Flüssigkristallschicht (2) und dem benachbarten Grundfarbpixel der dritten Grundfarbe (14-R) in der zweiten Flüssigkristallschicht (10) zur Darstellung eines Anzeigepixels (18-i) zusammenwirken.

2. Farb-Flüssigkristallanzeigeeinrichtung nach Anspruch 1, **dadurch gekennzeichnet, dass** Grundfarbpixel (14) in der ersten und zweiten Flüssigkristallschicht (2, 10) einzeln ansteuerbar sind.

3. Farb-Flüssigkristallanzeigeeinrichtung nach Anspruch 2, **dadurch gekennzeichnet, dass** Grundfarbpixel der ersten Grundfarbe (14-B) in der ersten und zweiten Flüssigkristallschicht (2, 10) gemeinsam ansteuerbarsind.

4. Farb-Flüssigkristallanzeigeeinrichtung nach einem der vorhergehenden Ansprüche, **dadurch gekennzeichnet,**
**dass** zwischen den nebeneinander angeordneten einzelnen Grundfarbpixel (14) Abstandsstege (22, 23) vorgesehen sind,
**dass** die Abstandsstege (22, 23) in der ersten Flüssigkristallschicht (2) in Betrachtungsrichtung (8) vor den Abstandsstegen (22, 23) in der zweiten Flüssigkristallschicht (10) angeordnet sind, und
**dass** im Bereich der Abstandsstege (22, 23) in Betrachtungsrichtung (8) vor der ersten Flüssigkristallschicht (2) eine Mehrzahl von Reflektorelementen (24) vorgesehen sind,
**dass** im Bereich der Grundfarbpixel (14) in Betrachtungsrichtung (8) hinter der zweiten Flüssigkristallschicht (10) Lichtabsorberelemente (28) angeordnet sind, und
**dass** in Betrachtungsrichtung (8) hinter den Absorberelementen (28) eine Hinterleuchtungseinrichtung (30) vorgesehen ist.

5. Farb-Flüssigkristallanzeigeeinrichtung nach einem der vorhergehenden Ansprüche, **dadurch gekennzeichnet, dass** die hintereinander angeordneten Grundfarbpixel der ersten Grundfarbe (14-B) in der ersten und der zweiten Flüssigkristallschicht (2, 10) eine entgegen gesetzte Helizität aufweisen.

6. Farb-Flüssigkristallanzeigeeinrichtung nach einem der vorhergehenden Ansprüche, **dadurch gekennzeichnet, dass** die erste Grundfarbe Blau ist.

7. Farb-Flüssigkristallanzeigeeinrichtung nach Anspruch 6, **dadurch gekennzeichnet, dass** die zweite Grundfarbe Grün und die dritte Grundfarbe Rot ist.

8. Farb-Flüssigkristallanzeigeeinrichtung nach Anspruch 7, **dadurch gekennzeichnet, dass** in Betrachtungsrichtung (8) vor den Grundfarbpixeln der Grundfarbe Rot (14-R) ein Rotfilter (21) angeordnet ist und/oder dass in dem Flüssigkristall des roten Grundfarbpixel (14-R) ein roter Farbstoff, insbesondere ein dichroitischer Farbstoff eingebracht ist.

9. Farb-Flüssigkristallanzeigeeinrichtung nach einem der vorhergehenden Ansprüche, **dadurch gekennzeichnet, dass** das zweite Substrat aus einem ersten und einem zweiten Teilsubstrat (6-1, 6-2) besteht, so dass die erste Flüssigkristallschicht (2) zwischen dem ersten Substrat (4) und dem ersten Teilsubstrat (6-1) eingeschlossen ist und dass die zweite Flüssigkristallschicht zwischen dem zweiten Teilsubstrat (6-2) und dem dritten Substrat (12) eingeschlossen ist.

10. Farb-Flüssigkristallanzeigeeinrichtung nach Anspruch 9 soweit er sich auf Anspruch 8 bezieht, **dadurch gekennzeichnet, dass** das Grundfarbpixel der Grundfarbe Rot (14-R) in der zweiten Flüssigkristallschicht angeordnet ist, und dass das Rotfilter (21) zwischen den beiden Teilsubstraten (6-1, 6-2) angeordnet ist.

11. Farb-Flüssigkristallanzeigeeinrichtung nach einem der vorhergehenden Ansprüche 4 bis 10, **dadurch gekennzeichnet, dass** in Betrachtungsrichtung (8) vor den Reflektorelementen (24) auf den Reflektorelementen (24) Lichtabsorberelemente (26) vorgesehen sind.

12. Farb-Flüssigkristallanzeigeeinrichtung nach einem der vorhergehenden Ansprüche 4 bis 11, **dadurch gekennzeichnet, dass** unmittelbar benachbarte Abstandsstege (22, 23) unterschiedlich breit sind.

13. Farb-Flüssigkristallanzeigeeinrichtung nach einem der vorhergehenden Ansprüche, **dadurch gekennzeichnet, dass** die Flächenausdehnung der Grundfarbpixel der ersten Grundfarbe (14-B) kleiner ist als die Flächenausdehnung der Grundfarbpixel der zweiten und dritten Grundfarbe (14-G, 14-R).

14. Farb-Flüssigkristallanzeigeeinrichtung nach Anspruch 13, **dadurch gekennzeichnet, dass** die Flächenausdehnung der Grundfarbpixel der ersten Grundfarbe (14-B) zwischen 20% und 70% und vorzugsweise zwischen 30% und 60% der Flächenausdehnung der Grundfarbpixel der zweiten und dritten Grundfarbe (14-G, 14-R) beträgt.

15. Farb-Flüssigkristallanzeigeeinrichtung nach Anspruch 13 oder 14, **dadurch gekennzeichnet, dass** die Flächenausdehnung der Grundfarbpixel der zweiten und dritten Grundfarbe (14-G, 14-R) gleich ist.

16. Farb-Flüssigkristallanzeigeeinrichtung nach einem der vorhergehenden Ansprüche 13 bis 15, **dadurch gekennzeichnet, dass** die Flächenausdehnung der Grundfarbpixel der ersten Grundfarbe (14-B) in der ersten und zweiten Flüssigkristallschicht (2, 10) gleich groß ist.

## Claims

1. Color liquid crystal display device, comprising
a first cholesteric liquid crystal layer (2) which is arranged between a first and a second substrate (4, 6; 6-1, 6-2), which contains a plurality of primary color pixels (14) arranged next to one another, wherein primary color pixels of a first (14-B) and of a second (14-G) primary color are alternately arranged next to one another, and a second cholesteric liquid crystal layer (10) which is arranged behind the first liquid crystal layer (2) between the second substrate (6; 6-1, 6-2) and a third substrate (12) in the direction of viewing (8), which contains a plurality of primary color pixels (14) arranged next to one another, wherein primary color pixels of the first (14-B) and of a third (14-R) primary color are alternately arranged next to one another,
**characterized in that**
the primary color pixels of the first primary color (14-B) in the first and second liquid crystal layer (2, 10) are arranged behind one another in the direction of viewing (8), the primary color pixels of the second primary color (14-G) in the first liquid crystal layer (2) and the primary color pixels of the third primary color (14-R) in the second liquid crystal layer (10) are arranged behind one another in the direction of viewing (8), and
in each case two primary color pixels of the first primary color (14.B) which are arranged behind one another in the first and second liquid crystal layer (2, 10) interact with the adjacent primary color pixel of the second primary color (14-G) in the first liquid crystal layer (2) and the adjacent primary color pixel of the third primary color (14-R) in the second liquid crystal layer (10) for representing a display pixel (18-i).

2. Color liquid crystal display device according to claim 1, **characterized in that** primary color pixels (14) in the first and second liquid crystal layer (2, 10) are adapted to be driven individually.

3. Color liquid crystal display device according to claim 2, **characterized in that** primary color pixels of the first primary color (14-B) in the first and second liquid crystal layer (2, 10) are adapted to be driven jointly.

4. Color liquid crystal display device according to any one of the preceding claims, **characterized in that**
spacing webs (22, 23) are provided between the individual primary color pixels (14) arranged next to one another,
the spacing webs (22, 23) in the first liquid crystal layer (2) are arranged in front of the spacing webs (22, 23) in the second liquid crystal layer (10) in the direction of viewing (8), and
a plurality of reflector elements (24) are provided in the area of the spacing webs (22, 23) in front of the first liquid crystal layer (2) in the direction of viewing (8),
light absorber elements (28) are arranged behind the second liquid crystal layer (10) in the direction of viewing (8) in the area of the primary color pixels (14), and a backlighting device (30) is provided behind the absorber elements (28) in the direction of viewing (8).

5. Color liquid crystal display device according to any one of the preceding claims, **characterized in that** the primary color pixels of the first primary color (14-B) arranged behind one another in the first and the second liquid crystal layer (2, 10) have an opposite helicity.

6. Color liquid crystal display device according to any one of the preceding claims, **characterized in that** the first primary color is blue.

7. Color liquid crystal display device according to claim 6, **characterized in that** the second primary color is green and the third primary color is red.

8. Color liquid crystal display device according to claim 7, **characterized in that** a red filter (21) is arranged in front of the primary color pixels of the primary color red (14-R) in the direction of viewing (8) and/or **in that** a red dye, particularly a dichroitic dye, is introduced in the liquid crystal of the red primary color pixel (14-R).

9. Color liquid crystal display device according to any one of the preceding claims, **characterized in that** the second substrate consists of a first and a second part-substrate (6-1, 6-2) so that the first liquid crystal layer (2) is enclosed between the first substrate (4) and the first part-substrate (6-1), and **in that** the second liquid crystal layer is enclosed between the second part-substrate (6-2) and the third substrate (12).

10. Color liquid crystal display device according to claim 9 where appended to claim 8, **characterized in that** the primary color pixel of the primary color red (14-R) is arranged in the second liquid crystal layer, and **in that** the red filter (21) is arranged between the two part-substrates (6-1, 6-2).

11. Color liquid crystal display device according to any one of the preceding claims 4 to 10, **characterized in that** in the direction of viewing (8) light absorber elements (26) are provided on the reflector elements (24) in front of the reflector elements (24).

12. Color liquid crystal display device according to any one of the preceding claims 4 to 11, **characterized in that** immediately adjacent spacing webs (22, 23) have a different width.

13. Color liquid crystal display device according to any one of the preceding claims, **characterized in that** the surface extent of the primary color pixels of the first primary color (14-B) is smaller than the surface extent of the primary color pixels of the second and third primary color (14-G, 14-R).

14. Color liquid crystal display device according to claim 13, **characterized in that** the surface extent of the primary color pixels of the first primary color (14-B) is between 20% and 70% and preferably between 30% and 60% of the surface extent of the primary color pixels of the second and third primary color (14-G, 14-R).

15. Color liquid crystal display device according to claim 13 or 14, **characterized in that** the surface extent of the primary color pixels of the second and third primary color (14-G, 14-R) is equal.

16. Color liquid crystal display device according to one of the preceding claims 13 to 15, **characterized in that** the surface extent of the primary color pixels of the first primary color (14-B) is equally large in the first and second liquid crystal layer (2, 10).

## Revendications

1. Dispositif d'affichage à cristaux liquides en couleur, comprenant
une première couche de cristaux liquides cholestériques (2) qui est disposée entre un premier et un deuxième substrat (4, 6 ; 6-1, 6-2) et qui comprend une pluralité de pixels de couleurs primaires (14) disposés côte à côte, des pixels de couleur primaire d'une première couleur primaire (14-B) et d'une deuxième couleur primaire (14-G) étant disposés côte à côte en alternance, et
une deuxième couche de cristaux liquides cholestériques (10) qui est disposée derrière la première couche de cristaux liquides (2), dans la direction d'observation (8), entre le deuxième substrat (6 ; 6-1, 6-2) et un troisième substrat (12) et qui comprend une pluralité de pixels de couleurs primaires (14) disposés côte à côte, des pixels de couleur primaire de la première couleur primaire (14-B) et d'une troisième couleur primaire (14-R) étant disposés côte à côte en alternance,
**caractérisé en ce que** les pixels de couleur primaire de la première couleur primaire (14-B) sont disposés dans les première et deuxième couches de cristaux liquides (2, 10) les uns derrière les autres, dans la direction d'observation (8),
les pixels de couleur primaire de la deuxième couleur primaire (14-G) dans la première couche de cristaux liquides (2) et les pixels de couleur primaire de la troisième couleur primaire (14-R) dans la deuxième couche de cristaux liquides (10) sont disposés les uns derrière les autres, dans la direction d'observation (8), et
respectivement deux pixels de couleur primaire de la première couleur primaire (14-B), qui sont disposés l'un derrière l'autre dans les première et deuxième couches de cristaux liquides (2, 10), coopèrent avec le pixel de couleur primaire adjacent de la deuxième couleur primaire (14-G) dans la première couche de cristaux liquides (2) et le pixel de couleur primaire adjacent de la troisième couleur primaire (14-R) dans la deuxième couche de cristaux liquides (10) pour représenter un pixel d'affichage (18-i).

2. Dispositif d'affichage à cristaux liquides en couleur selon la revendication 1, **caractérisé en ce que** des pixels de couleurs primaires (14) peuvent être excités individuellement dans les première et deuxième couches de cristaux liquides (2, 10).

3. Dispositif d'affichage à cristaux liquides en couleur selon la revendication 2, **caractérisé en ce que** des pixels de couleur primaire de la première couleur primaire (14-B) peuvent être excités ensemble dans les première et deuxième couches de cristaux liquides (2, 10).

4. Dispositif d'affichage à cristaux liquides en couleur selon l'une quelconque des revendications précédentes, **caractérisé en ce que**
des entretoises d'écartement (22, 23) sont prévues entre les pixels de couleurs primaires (14) individuels, disposés côte à côte,
les entretoises d'écartement (22, 23) sont disposées dans la première couche de cristaux liquides (2) dans la direction d'observation (8) devant les entretoises d'écartement (22, 23) dans la deuxième couche de cristaux liquides (10), et
dans la zone des entretoises d'écartement (22, 23) dans la direction d'observation (8), une pluralité d'éléments réflecteurs (24) est prévue devant la première couche de cristaux liquides (2),
dans la zone des pixels de couleurs primaires (14), des éléments absorbant la lumière (28) sont disposés derrière la deuxième couche de cristaux liquides (10), dans la direction d'observation (8), et
dans la direction d'observation (8), un dispositif de rétro-éclairage (30) est prévu derrière les éléments absorbants (28).

5. Dispositif d'affichage à cristaux liquides en couleur selon l'une quelconque des revendications précédentes, **caractérisé en ce que** les pixels de couleur primaire disposés les uns après les autres de la première couleur primaire (14-B) présentent une hélicité opposée dans les première et deuxième couches de cristaux liquides (2, 10).

6. Dispositif d'affichage à cristaux liquides en couleur selon l'une quelconque des revendications précédentes, **caractérisé en ce que** la première couleur primaire est le bleu.

7. Dispositif d'affichage à cristaux liquides en couleur selon la revendication 6, **caractérisé en ce que** la deuxième couleur primaire est le vert et la troisième couleur primaire est le rouge.

8. Dispositif d'affichage à cristaux liquides en couleur selon la revendication 7, **caractérisé en ce qu'**un filtre rouge (21) est disposé dans la direction d'observation (8) devant les pixels de couleur primaire de la couleur primaire rouge (14-R) et/ou **en ce qu'**un colorant rouge, en particulier un colorant dichroïque, est incorporé dans le cristal liquide du pixel de couleur primaire rouge (14-R).

9. Dispositif d'affichage à cristaux liquides en couleur selon l'une quelconque des revendications précédentes, **caractérisé en ce que** le deuxième substrat se compose d'un premier substrat partiel et d'un deuxième substrat partiel (6-1, 6-2), de sorte que la première couche de cristaux liquides (2) est comprise entre le premier substrat (4) et le premier substrat partiel (6-1), et **en ce que** la deuxième couche de cristaux liquides est comprise entre le deuxième substrat partiel (6-2) et le troisième substrat (12).

10. Dispositif d'affichage à cristaux liquides en couleur selon la revendication 9 dans la mesure où elle fait référence à la revendication 8, **caractérisé en ce que** le pixel de couleur primaire de la couleur primaire rouge (14-R) est disposé dans la deuxième couche de cristaux liquides, et **en ce que** le filtre rouge (21) est disposé entre les deux substrats partiels (6-1, 6-2).

11. Dispositif d'affichage à cristaux liquides en couleur selon l'une quelconque des revendications précédentes 4 à 10, **caractérisé en ce que** dans la direction d'observation (8) devant les éléments réflecteurs (24), des éléments absorbant la lumière (26) sont prévus sur les éléments réflecteurs (24).

12. Dispositif d'affichage à cristaux liquides en couleur selon l'une quelconque des revendications précédentes 4 à 11, **caractérisé en ce que** des entretoises d'écartement (22, 23) directement adjacentes sont de largeur différente.

13. Dispositif d'affichage à cristaux liquides en couleur selon l'une quelconque des revendications précédentes, **caractérisé en ce que** la superficie des pixels de couleur primaire de la première couleur primaire (14-B) est inférieure à la superficie des pixels de couleur primaire des deuxième et troisième couleurs primaires (14-G, 14-R).

14. Dispositif d'affichage à cristaux liquides en couleur selon la revendication 13, **caractérisé en ce que** la superficie des pixels de couleur primaire de la première couleur primaire (14-B) se situe entre 20 % et 70 %, de préférence entre 30 % et 60 %, de la superficie des pixels de couleur primaire des deuxième et troisième couleurs primaires (14-G, 14-R).

15. Dispositif d'affichage à cristaux liquides en couleur selon la revendication 13 ou 14, **caractérisé en ce que** la superficie des pixels de couleur primaire des deuxième et troisième couleurs primaires (14-G, 14-R) est identique.

16. Dispositif d'affichage à cristaux liquides en couleur selon l'une quelconque des revendications précédentes 13 à 15, **caractérisé en ce que** la superficie des pixels de couleur primaire de la première couleur primaire (14-B) présente la même importance dans les première et deuxième couches de cristaux liquides (2, 10).
